# EUROPÄISCHE PATENTSCHRIFT

(11) **EP 0 341 235 B1**
(45) Veröffentlichungstag und Bekanntmachung des Hinweises auf die Patenterteilung: **24.03.1993**
(21) Anmeldenummer: 89890127.7
(22) Anmeldetag: 28.04.1989
(51) Int. Cl.: B29C 65/20, B29L 31/10

(54) **Schweissmaschine zum Stumpfschweissen von Kunststoffprofilen**
Apparatus for butt-welding structural plastics elements
Appareil pour le soudage bout à bout de profilés en matière plastique

(30) Priorität: 04.05.1988 AT 1157/88
(43) Veröffentlichungstag der Anmeldung: 08.11.1989
(73) Patentinhaber: Ganzberger, Walter, A-4053 Haid (AT)
(72) Erfinder: Ganzberger, Walter, A-4053 Haid (AT)
(74) Vertreter: Hübscher, Heiner, Dipl.-Ing.

(56) Entgegenhaltungen:
- DE-A- 1 964 086
- DE-A- 2 155 601
- DE-A- 2 638 202
- DE-B- 2 312 362
- FR-A- 836 505

## Beschreibung

Die Erfindung bezieht sich auf eine Schweißmaschine zum Stumpfschweißen von Kunststoffprofilen, insbesondere Fensterrahmenprofile, mit relativ zueinander verschiebbaren Profilaufspanneinheiten und einem zwischen die Stirnflächen zweier zu verschweißender Profile einführbaren Heizspiegel, wobei die Aufspanneinheiten auf die Profile aufsetzbare, zu den Profilstirnflächen parallelgerichtete Schweißnaht-Begrenzungsmesser umfassen.

Profile aus thermoplastischen Kunststoffen, vorzugsweise extrudierte Polyvinylchlorid (PVC)-Profile werden zur Herstellung von Fenstern, Türen, Rahmen u.dgl. Bauteilen allgemein durch Stumpfschweißen miteinander verbunden, wozu es bereits Zwei- oder Vierkopfschweißmaschinen verschiedener Ausführungen gibt. In diesen Schweißmaschinen werden pro Schweißkopf zwei Profile miteinander verschweißt, wobei die in den Profilaufspanneinheiten festgeklemmten Profile durch entsprechendes Verschieben der Profilaufspanneinheiten stirnseitig an einen in den Vorschubweg der Aufspanneinheiten eingebrachten Heizspiegel bis zum Anschmelzen angedrückt und dann nach Entfernen des Heizspiegels die plastifizierten Profilstirnflächen zusammengepreßt werden. Zur Ausbildung einer sauberen Schweißnaht gibt es dabei, wie z. B. die DE-B-23 12 362 zeigt, mit geeignetem Abstand von den Profilstirnflächen angeordnete Schweißnaht-Begrenzungsmesser, die den beim Zusammenpressen der Profilstirnflächen auftretenden, für eine ordnungsgemäß Schweißverbindung erforderlichen Fügeweg begrenzen. Je nach Anzahl der Schweißköpfe lassen sich so zwei oder vier Schweißverbindungen gleichzeitig herstellen, welche Schweißverbindungen aber an ein und demselben Werkstück sitzen müssen. Ein exaktes gegenseitiges Abstimmen zweier zusammengehöriger Werkstücke, beispielsweise das Abstimmen von Flügel- und Stockrahmen eines Fensters oder einer Tür ist wegen der nicht zu vermeidenden Herstellungstoleranzen beim Stumpfschweißen der Profile daher bisher unmöglich und außerdem bleibt die Schweißkapazität der bekannten Schweißmaschinen allein auf Grund der einzuhaltenden Zeiten für das Anwärmen, Zusammenpressen und Abkühlen der Profile beschränkt.

Gemäß der DE-A-21 55 601 wurde auch schon vorgeschlagen, für den Schweißvorgang mehrere Profile unter Zwischenlage von Abstandhaltern auf einem Schlitten gestapelt aufzuspannen, dann beim Schweißen die herausquellenden Schweißwulste frei zusammenwachsen zu lassen und diese schließlich mit einem der Abstandhalterstärke genau angepaßten Schneidwerkzeug zu entfernen, doch kommt es dabei wegen der Notwendigkeit einer eigenen Schneidvorrichtung zu einem hohen maschinellen Mehraufwand, die Profile müssen zeitraubend und umständlich von der Schweißmaschine in die Schneidmaschine umgespannt werden und nicht zuletzt ist durch das Zerspanen der ganzen Wulste eine Beeinträchtigung der Oberflächenqualität im Bearbeitungsbereich zu befürchten.

Der Erfindung liegt daher die Aufgabe zugrunde, diese Mängel zu beseitigen und eine Schweißmaschine der eingangs geschilderten Art zu schaffen, die ein besonders rationelles Stumpfschweißen von Kunststoffprofilen gewährleistet und darüber hinaus die Herstellung exakt einander zugeordneter Werkstücke ermöglicht.

Die Erfindung löst diese Aufgabe dadurch, daß die Aufspanneinheiten zur Aufnahme zweier übereinanderliegender Profile, vorzugsweise ein Flügel- und ein Stock- oder Blendrahmenprofil, bestimmt sind und zusätzlich zu den äußeren Begrenzungsmessern ein zwischen die Profile einlegbares Zwischenbegrenzungsmesser aufweisen, das sich in Spannrichtung der Profile federnd nachgiebig und in Verschieberichtung mit den Aufspanneinheiten mitbewegbar abstützt. Da jede Aufspanneinheit zwei Profile spannen kann, lassen sich pro Schweißkopf mit wenig Mehraufwand statt einer gleichzeitig zwei Schweißverbindungen herstellen, wobei für beide Schweißverbindungen genau die gleichen Bedingungen hinsichtlich Wärmebehandlung, Druckbeaufschlagung, Schweißzeiten und vor allem auch Schweiß- und Fügewege gelten und daher durch das Schweißen auch zwei genau aufeinander abgestimmte Werkstücke entstehen. Das Zwischenbegrenzungsmesser sorgt für eine ordnungsgemäße Schweißnahtausbildung auch in den zwischen den Profilen liegenden Seitenbereichen, wobei die Nachgiebigkeit der Messerabstützung ein einwandfreies Aufspannen beider Profile garantiert, so daß trotz der erreichbaren Verdoppelung der Schweißkapazität keine Beeinträchtigung der Schweißqualität zu befürchten ist.

Eine besonders zweckmäßige Konstruktion ergibt sich, wenn erfindungsgemäß das eine der Zwischenbegrenzungsmesser zweier einander zugeordneter Aufspanneinheiten fest und das andere gegen die Kraft einer Rückstellfeder verschiebbar auf einer gemeinsamen, parallel zur Aufspannebene und vorzugsweise parallel zu einem der Profile verlaufenden Trägerschiene sitzen, die sich ihrerseits gegen die Kraft einer Stützfeder normal zur Aufspannebene bewegbar an einem mit der einen Aufspanneinheit verbundenen Lagerbock abstützt, wobei die andere Aufspanneinheit einen Mitnehmer für das verschiebbare Zwischenbegrenzungsmesser aufweist. Durch dieses Zusammenfassen beider Zwischenbegrenzungsmesser braucht jeweils nur eine der Aufspanneinheiten mit den Zwischenbegrenzungsmessern ausgestattet zu sein, so daß sich vor allem eine günstige Raumausnützung und eine einfache Mitnahme der Zwischenbegrenzungsmesser einerseits durch die tragende Aufspanneinheit selbst, anderseits durch einen geeigneten Mitnehmer der anderen Aufspanneinheit ergeben.

Besteht dabei der Mitnehmer aus einem um eine Normalachse zur Aufspannebene drehverstellbaren Exzenter, kann durch Verstellen dieses Exzenters der Mitnahmebereich variiert und damit die Zwischenbegrenzungsmesser an unterschiedliche Profildimensionen angepaßt bzw. der Abstand des Zwischenbegrenzungsmessers von der Profilstirnfläche vorgewählt werden.

Gemäß einer günstigen Weiterbildung der Erfindung ist der Lagerbock an einem vorzugsweise parallel zu den Profilstirnflächen ausgerichteten, über eine Konsole od. dgl. an der Aufspanneinheit abgestützten Hubzylinder befestigt, wodurch ein Aus- und Einfahren des Hubzylinders die Zwischenbegrenzungsmesser positioniert oder in eine Freigabestellung zum freien Einlegen und Entnehmen der Profile bringt.

Erfindungsgemäß können an der Konsole auch zwei übereinander angeordnete, mittels Hubzylinder aus- und einfahrbare Anschlagstifte zur Bestimmung der Einlegeposition der aufeinanderliegenden Profile abgestützt sein. Diese Anschlagstifte erlauben beim Einlegen und Aufspannen der zu verschweißenden Profile das Einhalten der gewünschten Ausgangspositionen für alle Profile, so daß ein gleichmäßiges Verschweißen der übereinander angeordneten Profile gewährleistet ist.

In der Zeichnung ist der Erfindungsgegenstand in einem Ausführungsbeispiel rein schematisch dargestellt, und zwar zeigen
Fig. 1 und 2 einen Schweißkopf einer erfindungsgemäßen Schweißmaschine in teilgeschnittener Seitenansicht bzw. in Draufsicht,

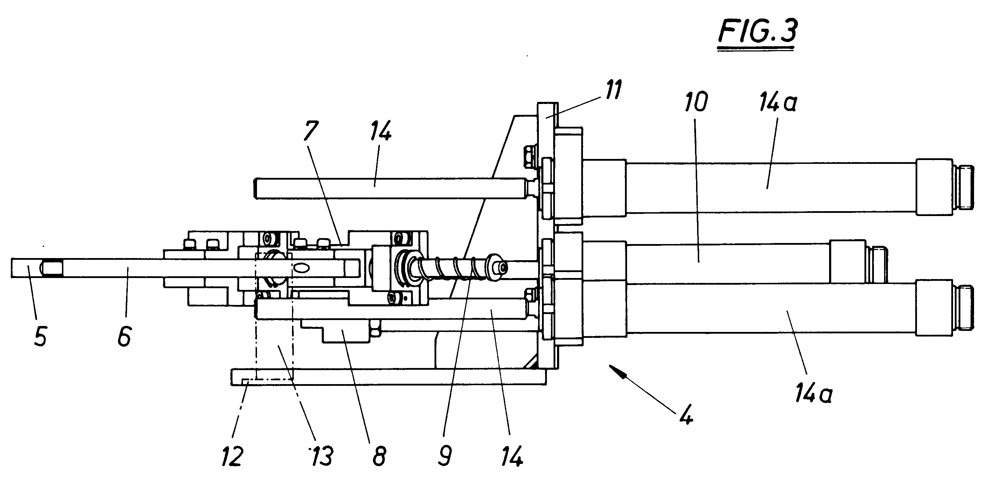

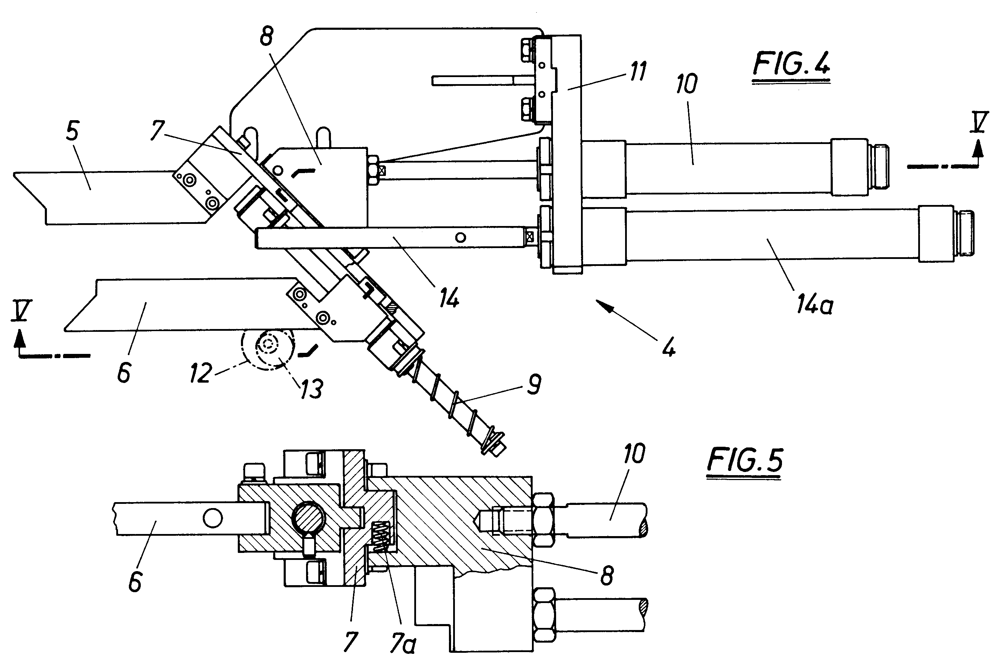

Fig. 3 und 4 die Zwischenbegrenzungsmesser-Einrichtung dieses Schweißkopfes in Seitenansicht bzw. Draufsicht und
Fig. 5 einen Schnitt nach der Linie V-V der Fig. 4.

Ein Schweißkopf 1 einer nicht weiter dargestellten Zwei- oder Vierkopfschweißmaschine zum Stumpfschweißen von Kunststoffprofilen weist zwei um 90° zueinander winkelversetzt ausgerichtete Profilaufspanneinheiten 2, 3 auf, die aus einer Auflagerplatte 2a, 3a mit einem unteren Schweißnaht-Begrenzungsmesser 2b, 3b und aus einem relativ zur Auflagerplatte 2a, 3a verschiebbaren Spannschlitten 2c, 3c bestehen, welcher Schlitten eine über einen Spannzylinder 2d, 3d druckbeaufschlagbare Druckplatte 2e, 3e mit einem oberen Schweißnaht-Begrenzungsmesser 2f, 3f aufnimmt. Die eine Aufspanneinheit 2 ist fest am Maschinengestell 1a montiert, während die andere Aufspanneinheit 3 verschiebbar am Maschinengestell 1a lagert.

Die beiden Aufspanneinheiten 2, 3 sind zum Aufspannen jeweils zweier übereinanderliegender Profile U, O geeignet, wobei eine Zwischenbegrenzungsmesser- Einrichtung 4 vorgesehen ist, die zwei den Aufspann- einheiten 2, 3 zugeordnete und zwischen die aufeinander zu legenden Profile U, O einschiebbare Zwischenbegrenzungsmesser 5, 6 umfaßt. Das Zwischenbegrenzungsmesser 5 sitzt dabei fest auf einer zur Aufspanneinheit 3 parallelgerichteten Trägerschiene 7, die ihrerseits gegen die Kraft einer Stützfeder 7a in Wirkrichtung der Spannzy- linder 2d, 3d bewegbar in einem Lagerbock 8 abgestützt ist, und das andere Zwischenbegrenzungsmesser 6 wird gegen die Kraft einer Rückstellfeder 9 längsverschiebbar auf der Trägerschiene 7 geführt. Der Lagerbock 8 ist über einen Hubzylinder 10 in Richtung der Zwischenbegrenzungsmesser 5, 6 aus- und einfahrbar an einer Konsole 11 angeordnet, mit der die ganze Zwischenbegrenzungsmesser-Einrichtung 4 fest mit der Aufspanneinheit 2 in Verbindung steht. Zur Relativverschiebung der beiden Zwischenbegrenzungsmesser 5, 6 weist die andere Aufspanneinheit 3 einen Mitnehmer 12 auf, der aus einem von der Auflagerplatte 3a hochragenden drehverstellbaren Exzenter 13 besteht. An der Konsole 11 sind zusätzlich zu den Zwischenbegrenzungsmessern 5, 6 ober- und unterhalb dieser Messer angeordnete Anschlagstifte 14 abgestützt, die mittels eigener Hubzylinder 14a parallel zum Lagerbock 8 vorschiebbar und zurückziehbbar sind.

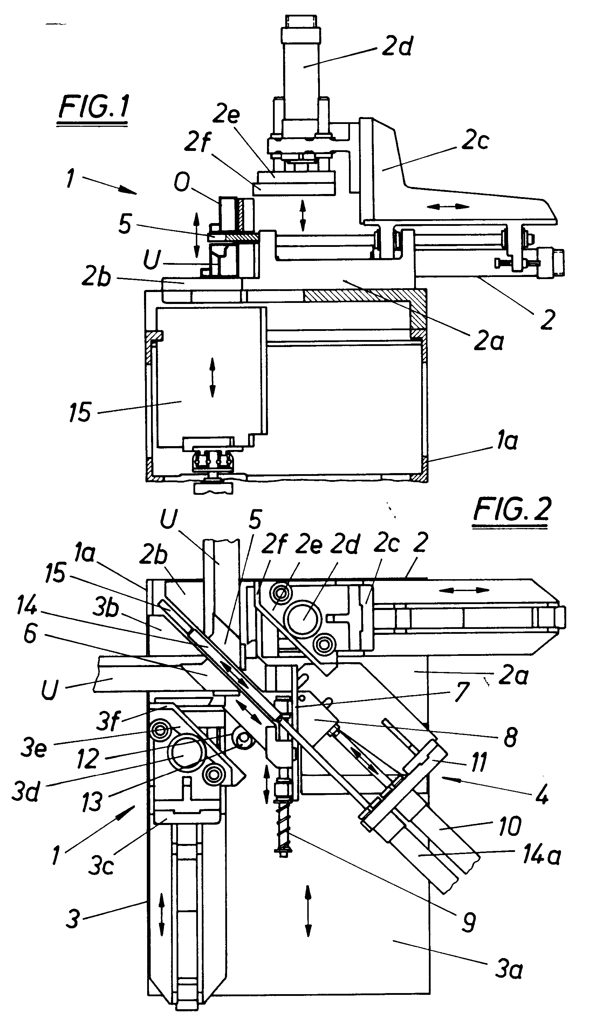

Der Schweißkopf 1 gewährleistet ein besonders rationelles Stumpfschweißen von Kunststoffprofilen, da er das gleichzeitige Herstellen zweier Schweißverbindungen für übereinanderliegende Profile U, O erlaubt, so daß vor allem auch zusammengehörige Werkstücke, wie Flügel- und Stockrahmen von Fenstern oder Türen, gleichzeitig und daher auch genau aufeinander abgestimmt gefertigt werden können. Zum Einlegen der zu verschweißenden Profile sind die Aufspanneinheiten 2, 3 in ihre Einlegeposition auseinandergefahren und die Schlitten 2c, 3c befinden sich in zurückgezogener Stellung. Auch die Zwischenbegrenzungsmesser 5, 6 sind bei eingefahrenem Hubzylinder 10 zurückgezogen, so daß die unteren Profile U, beispielsweise die Profile für einen Flügelrahmen, frei in die Aufspanneinheiten 2, 3 einlegbar sind, wobei die ausgefahrenen Anschlagstifte 14 das genaue Einhalten der Spannposition erlauben. Die Zwischenbegrenzungsmesser 5, 6 fahren aus und legen sich mit gewünschtem Abstand zu den auf Gehrung geschnittenen Profilstirnflächen auf die unteren, bereits eingelegten Profile U auf (Fig. 2). Nun lassen sich die nächsten beiden Profile O, beispielsweise die Profile eines Stockrahmens, auf die unteren Profile U und die Zwischenbegrenzungsmesser 5, 6 auflegen, wobei der obere Anschlagstift 14 wiederum die genaue Spannposition bestimmt. Nach diesem Einlegen der Profile U, O fahren die Schlitten 2c, 3c in Spannstellung vor und durch Beaufschlagung der Spannzylinder 2d, 3d werden die Profile U, O zwischen den Auflagerplatten 2a, 3a mit den unteren Schweißnaht-Begrenzungsmessern 2b, 3b einerseits und den Druckplatten 2e, 3e mit den oberen Begrenzungsmessern 2f, 3f anderseits sowie den im erforderlichen Maß nachgebenden Zwischenbegrenzungsmessern 5, 6 aufgespannt. Die Anschlagstifte 14 fahren zurück und geben den Zwischenraum zwischen den Profilstirnflächen frei, so daß der unterhalb der Aufspanneinheiten 2, 3 angeordnete Heizspiegel 15 zwischen die Profile U, O eingeführt werden kann. Die Aufspanneinheit 3 wird vorgeschoben und drückt die Profilstirnflächen gegen den Heizspiegel 15, bis der Kunststoff entsprechend plastifiziert ist, dann senkt sich nach Zurückfahren der Aufspanneinheit 3 der Heizspiegel 15 wieder ab und die Aufspanneinheit 3 wird zum eigentlichen Schweißvorgang erneut vorgedrückt, so daß die Profile U, O mit ihren plastifizierten Stirnflächen direkt zusammengepreßt werden. Bei den Verschiebebewegungen der Aufspanneinheit 3 sorgt der Mitnehmer 12, der sich an das verschiebbare Zwischenbegrenzungsmesser 6 anlegt, für ein Mitbewegen dieses Zwischenbegrenzungsmessers 6 mit den in der Auf- spanneinheit 3 gespannten Profilen U, O. Endlage und Mitnahmebereich des Zwischenbegrenzungsmessers 6 sind dabei durch Drehen des Mitnehmerexzenters 13 einstellbar. Anschließend an das Zusammenpressen der Profile U, O werden die Spannzylinder 2d, 3d entlastet, die Aufspanneinheiten 2, 3 öffnen und fahren in die Ausgangsstellung zurück. Die verschweißten oberen Profile O können dem Schweißkopf 1 frei entnommen werden, worauf die Zwischenbegrenzungsmesser 5, 6 zurückgezogen werden und auch die unteren miteinander verschweißten Profile U sind schwierigkeitslos abzunehmen.

In einem gemeinsamen Arbeitsschritt werden so gleichzeitig übereinanderliegende Profile miteinander verschweißt, was einen besonders rationellen Schweißvorgang mit sich bringt und vor allem auch für beide gleichzeitig verschweißten Werkstücke exakt gleiche Schweißverbindungen entstehen läßt.

## Patentansprüche

1. Schweißmaschine zum Stumpfschweißen von Kunststoffprofilen, insbesondere Fensterrahmenprofile, mit relativ zueinander verschiebbaren Profilaufspanneinheiten (2,3) und einem zwischen die Stirnflächen zweier zu verschweißender Profile einführbaren Heizspiegel (15), wobei die Aufspanneinheiten (2,3) auf die Profile aufsetzbare, zu den Profilstirnflächen parallelgerichtete Schweißnaht-Begrenzungsmesser (2b,2f;3b,3f) umfassen, dadurch gekennzeichnet, daß die Aufspanneinheiten (2, 3) zur Aufnahme zweier übereinander liegender Profile (U, O), vorzugsweise ein Flügel- und ein Stock- oder Blendrahmenprofil, bestimmt sind und zusätzlich zu den äußeren Begrenzungsmessern (2b,f;3b,f) ein zwischen die Profile (U, O) einlegbares Zwischenbegrenzungsmesser (5, 6) aufweisen, das sich in Spannrichtung der Profile federnd nachgiebig und in Verschieberichtung mit den Aufspanneinheiten (2, 3) mitbewegbar abstützt.

2. Schweißmaschine nach Anspruch 1, dadurch gekennzeichnet, daß das eine (5) der Zwischenbegrenzungsmesser (5, 6) zweier einander zugeordneter Aufspanneinheiten (2, 3) fest und das andere (6) gegen die Kraft einer Rückstellfeder (9) verschiebbar auf einer gemeinsamen, parallel zur Aufspannebene und vorzugsweise parallel zu einem der Profile verlaufenden Trägerschiene (7) sitzen, die sich ihrerseits gegen die Kraft einer Stützfeder (7a) normal zur Aufspannebene bewegbar an einem mit der einen Aufspanneinheit (2) verbundenen Lagerbock (8) abstützt, wobei die andere Aufspanneinheit (3) einen Mitnehmer (12) für das verschiebbare Zwischenbegrenzungsmesser (6) aufweist.

3. Schweißmaschine nach Anspruch 2, dadurch gekennzeichnet, daß der Mitnehmer (12) aus einem um eine Normalachse zur Aufspannebene drehverstellbaren Exzenter (13) besteht.

4. Schweißmaschine nach Anspruch 2, dadurch gekennzeichnet, daß der Lagerbock (8) an einem vorzugsweise parallel zu den Profilstirnflächen ausgerichteten, über eine Konsole (11) od. dgl. an der Aufspanneinheit (2) abgestützten Hubzylinder (10) befestigt ist.

5. Schweißmaschine nach Anspruch 4, dadurch gekennzeichnet, daß an der Konsole (11) zwei übereinander angeordnete, mittels Hubzylinder (14a) aus- und einfahrbare Anschlagstifte (14) zur Bestimmung der Einlegeposition der aufeinander liegenden Profile (U, O) abgestützt sind.

## Claims

1. A welding machine for the butt-welding of plastic profiles, more particularly window frame profiles, comprising profile clamping units (2, 3) displaceable relatively to one another and a heating plate (15) introducible between the end faces of two profiles for welding, the clamping units (2, 3) comprising weld seam limiting gauges (2b, 2f; 3b, 3f) directed in parallel to the profile end faces and adapted to be fitted on the profiles, characterised in that the clamping units (2, 3) are intended to accommodate two profiles (U, O) disposed one above the other, preferably a movable member frame profile and a fixed frame profile, and comprise, in addition to the outer boundary gauges (2b, f; 3b, f), an intermediate boundary gauge (5, 6) which is isertable between the profiles (U, O) and which in the clamping direction of the profiles is supported resiliently and in the direction of displacement is supported so as to be co-movable with the clamping units (2, 3).

2. A welding machine according to claim 1,
characterised in that one (5) of the intermediate boundary gauges (5, 6) of two associated clamping units (2, 3) is fixed and the other (6) is displaceable against the force of a return spring (9) on a common carrier rail (7) extending parallel to the clamping plane and preferably parallel to one of the profiles, the carrier rail in turn bearing against a mounting (8) connected to one of the clamping units (2), so as to be movable in normal relationship to the clamping plane against the force of a support spring (7a), the other clamping unit (3) having a driver (12) for the displaceable intermediate boundary gauge (6).

3. A welding machine according to claim 2,
characterised in that the driver (12) consists of an eccentric (13) rotatably movable about a normal axis to the clamping plane.

4. A welding machine according to claim 2,
characterised in that the mounting (8) is fixed on a jack cylinder (10) preferably extending parallel to the profile end faces and supported on the clamping unit (2) by way of a bracket (11) or the like.

5. A welding machine according to claim 4,
characterised in that two stop pins (14) disposed one above the other and extensible and retractable by means of the jack cylinder (14a) are supported on the bracket (11) to determine the insertion position of the superposed profiles (U, O).

## Revendications

1. Machine à souder pour le soudage bord à bord de profilés en matière plastique, notamment de profilés de châssis de fenêtres, comprenant des unités (2, 3) de bridage des profilés, qui peuvent coulisser l'une par rapport à l'autre, et une lame chauffante (15) qui peut être interposée entre les surfaces frontales de deux profilés à souder, dans laquelle les unités (2, 3) de bridage comprennent des lames de limitation du cordon de soudure (2b, 2f ; 3b, 3f), orientées parallèlement aux surfaces frontales des profilés, et qui peuvent être appliquées sur les profilés,
caractérisée en ce que les unités de bridage (2, 3) sont conçues pour recevoir deux profilés (U, O) disposés l'un au-dessus de l'autre, de préférence un profilé de châssis mobile et un profilé de châssis fixe ou dormant et présentent, en supplément des lames de limitation extérieures (2b, f, 3b, f), une lame de limitation intermédiaire (5, 6) qui peut être interposée entre les profilés (U, O) et qui est montée de façon à pouvoir céder élastiquement sous l'effort dans la direction du bridage des profilés et de façon à pouvoir accompagner le mouvement des unités de bridage (2, 3) dans la direction du coulissement.

2. Machine de soudage selon la revendication 1,
caractérisée en ce que l'une (5) des lames de limitation intermédiaires (5, 6) des deux unités de bridage (2, 3) associées entre elles est montée rigidement sur une barre porteuse commune (7) qui s'étend parallèlement au plan de bridage et de préférence parallèlement à l'un des profilés, tandis que l'autre (6) est montée sur cette barre de manière à pouvoir coulisser à l'encontre de la force d'un ressort de rappel (9), cette barre porteuse prenant à son tour appui sur un support (8) relié à la première unité de bridage (2), de manière à pouvoir se déplacer perpendiculairement au plan de bridage à l'encontre de la force d'un ressort d'appui (7a), tandis que l'autre unité de bridage (3) présente un taquet entraîneur (12) servant à entraîner la lame de limitation intermédiaire coulisssante (6).

3. Machine à souder selon la revendication 2,
caractérisée en ce que le taquet entraîneur (12) est constitué par un excentrique (13) qu'on peut régler par rotation autour d'un axe perpendiculaire en plan de bridage.

4. Machine à souder selon la revendication 2,
caractérisée en ce que le support (8) est fixé à un vérin (10), orienté de préférence parallèlement aux surfaces frontales des profilés, et qui est fixé sur l'unité de bridage (2) par l'intermédiaire d'une console (11) ou équivalent.

5. Machine à souder selon la revendication 4,
caractérisée en ce que, sur la console (11), sont montées deux tiges de butée (14), disposées l'une au-dessus de l'autre, qui peuvent être mises en extension et rétractées à l'aide de vérins (14a), et qui sont destinées à fixer la position de mise en place des profilés (U, O) superposés.
